(19) Europäisches Patentamt
European Patent Office
Office européen des brevets

(11) **EP 4 210 144 A2**

(12) **EUROPEAN PATENT APPLICATION**

(43) Date of publication:
**12.07.2023 Bulletin 2023/28**

(21) Application number: **23150199.0**

(22) Date of filing: **03.01.2023**

(51) International Patent Classification (IPC):
**H01M 10/0567** (2010.01) **H01M 10/0569** (2010.01)
**H01M 10/0525** (2010.01) **H01M 10/42** (2006.01)

(52) Cooperative Patent Classification (CPC):
**H01M 10/0567; H01M 10/0525; H01M 10/0569;
H01M 10/4235;** H01M 2300/0025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.01.2022 KR 20220000742**

(71) Applicant: **SK On Co., Ltd.
Seoul 03161 (KR)**

(72) Inventor: **SHIM, You Jin
34124 Daejeon (KR)**

(74) Representative: **Stolmár & Partner
Patentanwälte PartG mbB
Blumenstraße 17
80331 München (DE)**

(54) **ELECTROLYTE FOR LITHIUM SECONDARY BATTERY AND LITHIUM SECONDARY BATTERY INCLUDING THE SAME**

(57)    An electrolyte for a lithium secondary battery according to exemplary embodiments may include a lithium salt; a solvent composed of a non-aqueous solvent and including a carbonate solvent; and an additive including a bis(fluorosulfonyl)imide alkali metal salt. Accordingly, it is possible to provide an electrolyte for a lithium secondary battery having excellent high-temperature characteristics, and a lithium secondary battery including the same.

**EP 4 210 144 A2**

**Description**

[BACKGROUND OF THE INVENTION]

1. Field of the Invention

The present invention relates to an electrolyte for a lithium secondary battery and a lithium secondary battery including the same, and more specifically, to an electrolyte for a lithium secondary battery, which includes a lithium salt, a solvent and an additive, and a lithium secondary battery including the electrolyte.

2. Description of the Related Art

A secondary battery is a battery which can be repeatedly charged and discharged, and has been widely applied to portable electronic devices such as a mobile phone, a laptop computer, etc. or electric vehicles as a power source thereof.
A lithium secondary battery has a high operating voltage and a high energy density per unit weight, and is advantageous in terms of a charging speed and light weight. In this regard, the lithium secondary battery has been actively developed and applied as a power source.
For example, the lithium secondary battery may include: an electrode assembly including a cathode, an anode, and a separation membrane interposed between the cathode and the anode; and an electrolyte in which the electrode assembly is impregnated in a case.
For example, the cathode may include a lithium metal oxide capable of reversibly intercalating and deintercalating lithium ions as a cathode active material.
Meanwhile, in the lithium secondary battery, structural deformation of the lithium metal oxide, side reactions of the electrolyte, and the like may occur at the time of repeated charging and discharging. In this case, life-span characteristics (e.g., capacity retention rate) of the lithium secondary battery may be reduced.
In particular, the lithium secondary battery is placed in a high-temperature environment at the time of repeated charging and discharging, as well as overcharging. In this case, the above-described problems are accelerated, thereby causing an expansion phenomenon of battery (an increase in the battery thickness due to gases generated inside the battery), an increase in the internal resistance of the battery, and a deterioration in life-span characteristics of the battery. Therefore, studies on adding various additives to improve high-temperature properties are being carried out.
For example, Korean Patent Laid-Open Publication No. 10-2019-0092284 discloses a solution for improving the high-temperature performance of the lithium secondary battery by adding lithium bis(fluorosulfonyl)imide to the electrolyte for a lithium secondary battery, but there are some limitations in providing sufficient high-temperature performance.

[SUMMARY OF THE INVENTION]

An object of the present invention is to provide an electrolyte for a lithium secondary battery, which has excellent high-temperature characteristics.
In addition, another object of the present invention is to provide a lithium secondary battery including the electrolyte having excellent high-temperature characteristics.
To achieve the above objects, according to an aspect of the present invention, there is provided an electrolyte for a lithium secondary battery including: a lithium salt; a solvent composed of a non-aqueous solvent and including a carbonate solvent; and an additive including a bis(fluorosulfonyl)imide alkali metal salt.
In one embodiment, the bis(fluorosulfonyl)imide alkali metal salt may include at least one selected from the group consisting of sodium bis(fluorosulfonyl)imide, potassium bis(fluorosulfonyl)imide, rubidium bis(fluorosulfonyl)imide and cesium bis(fluorosulfonyl)imide.
In one embodiment, the bis(fluorosulfonyl)imide alkali metal salt may exclude lithium bis(fluorosulfonyl)imide.
In one embodiment, the additive may be included in an amount of 0.1 to 10% by weight based on a total weight of the electrolyte.
In one embodiment, the additive may be included in an amount of 0.5 to 5% by weight based on the total weight of the electrolyte.
In one embodiment, the solvent may exclude water, an alcohol solvent and a glycol ether solvent.
In one embodiment, the carbonate solvent may include a cyclic carbonate solvent and a linear carbonate solvent.
In one embodiment, the cyclic carbonate solvent may include at least one selected from the group consisting of ethylene carbonate, propylene carbonate and butylene carbonate.
In one embodiment, the linear carbonate solvent may include at least one selected from the group consisting of dimethyl carbonate, ethyl methyl carbonate, diethyl carbonate, methyl propyl carbonate, ethyl propyl carbonate and dipropyl carbonate.

In one embodiment, the electrolyte may include at least one auxiliary additive selected from the group consisting of a cyclic carbonate compound, a fluorine-substituted cyclic carbonate compound, a sultone compound, a cyclic sulfate compound and an oxalatophosphate compound.

In one embodiment, the auxiliary additive may be included in an amount of 0.1 to 10% by weight based on the total weight of the electrolyte.

In one embodiment, a ratio of a weight of the auxiliary additive to a weight of the additive in the electrolyte may be 0.5 to 10.

According to another aspect of the present invention, there is provided a lithium secondary battery including: a cathode including a lithium metal oxide as a cathode active material; an anode disposed to face the cathode; and the above-described electrolyte for a lithium secondary battery.

The electrolyte for a lithium secondary battery according to exemplary embodiments may form a robust solid electrolyte interphase (SEI) on the surface of the anode. Accordingly, it is possible to implement a lithium secondary battery having improved high-temperature storage characteristics.

For example, the inventive electrolyte may provide an excellent capacity retention rate of the battery at a high temperature, a low resistance increase rate, and an excellent effect of suppressing gas generation rate.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a plan view schematically illustrating a lithium secondary battery according to exemplary embodiments; and
FIG. 2 is a cross-sectional view schematically illustrating the lithium secondary battery according to exemplary embodiments.

[DETAILED DESCRIPTION OF THE INVENTION]

According to embodiments of the present invention, there is provided an electrolyte for a lithium secondary battery which includes: a solvent composed of a non-aqueous solvent and including a carbonate solvent; and a bis(fluorosulfonyl)imide alkali metal salt as an additive.

In addition, there is also provided a lithium secondary battery having improved high-temperature storage characteristics including the electrolyte.

**<Electrolyte for lithium secondary battery>**

The electrolyte for a lithium secondary battery according to exemplary embodiments may include: a lithium salt; a solvent composed of a non-aqueous solvent and including a carbonate solvent; and an additive including a bis(fluorosulfonyl)imide alkali metal salt.

The electrolyte for a lithium secondary battery according to exemplary embodiments may implement a lithium secondary battery having improved high-temperature storage characteristics.

Hereinafter, components of the present invention will be described in more detail.

**Additive**

The electrolyte for a lithium secondary battery according to exemplary embodiments may include an additive including a bis(fluorosulfonyl)imide alkali metal salt.

For example, the bis(fluorosulfonyl)imide alkali metal salt may be sodium bis(fluorosulfonyl)imide (NaFSI), potassium bis(fluorosulfonyl) imide (KFSI), rubidium bis(fluorosulfonyl)imide (RbFSI), cesium bis(fluorosulfonyl)imide (CsFSI) or a mixture thereof, and preferably, sodium bis(fluorosulfonyl)imide (NaFSI), potassium bis(fluorosulfonyl)imide (KFSI) or a mixture thereof.

When the electrolyte includes the bis(fluorosulfonyl)imide alkali metal salt, a robust solid electrolyte interphase (SEI) may be formed on an anode. Thereby, decomposition of an organic solvent (such as EC, EMC etc.) may be effectively prevented, such that gas generation and expansion of the battery may be significantly decreased.

In one embodiment, the bis(fluorosulfonyl)imide alkali metal salt may exclude lithium bis(fluorosulfonyl)imide (LiFSI). The bis(fluorosulfonyl)imide alkali metal salt preferably includes NaFSI, KFSI or a mixture thereof, and may exclude LiFSI. In this case, high-temperature characteristics of the battery may be significantly improved compared to the existing electrolyte. For example, it is possible to improve the capacity retention rate of the battery at high temperature and provide a low resistance increase rate. Particularly, it is possible to significantly suppress the gas generation rate.

The additive may be included in an amount of 0.1 to 10% by weight ("wt.%"), 0.25 to 10 wt.%, or 0.5 to 5 wt.% based on a total weight of the electrolyte. In this case, it is possible to implement a lithium secondary battery having improved high-temperature storage characteristics.

**Solvent**

The solvent included in the electrolyte for a lithium secondary battery according to exemplary embodiments may include an organic compound which provides sufficient solubility to the lithium salt, additive and an auxiliary additive, etc., and does not have reactivity with the lithium secondary battery. For example, a non-aqueous solvent is used as the solvent, and the electrolyte may be provided as a non-aqueous electrolyte.

In one embodiment, the solvent may be composed of a non-aqueous solvent, and may include a carbonate solvent.

In one embodiment, the carbonate solvent may include a linear carbonate solvent and a cyclic carbonate solvent.

The linear carbonate solvent may be, for example, dimethyl carbonate (DMC), ethyl methyl carbonate (EMC), diethyl carbonate (DEC), methyl propyl carbonate, ethyl propyl carbonate and dipropyl carbonate.

The cyclic carbonate solvent may be, for example, ethylene carbonate (EC), propylene carbonate (PC), or butylene carbonate.

In some embodiments, the solvent may include a larger amount of the linear carbonate solvent than the cyclic carbonate solvent based on a volume.

For example, a mixing volume ratio of the linear carbonate solvent and the cyclic carbonate solvent may be 1:1 to 9:1, and preferably 1.5:1 to 4:1.

In some embodiments, the solvent may include an ester solvent, an ether solvent, a ketone solvent or the like. These solvents may be used alone or in combination of two or more thereof.

The ester solvent may be, for example, methyl acetate (MA), ethyl acetate (EA), n-propyl acetate (n-PA), 1,1-dimethylethyl acetate (DMEA), methyl propionate (MP), ethyl propionate (EP), γ-butyrolactone (GBL), decanolide, valerolactone, mevalonolactone, or caprolactone.

The ether solvent may be, for example, dibutyl ether, dimethoxy ethane, 2-methyltetrahydrofuran, or tetrahydrofuran.

The ketone solvent may be, for example, cyclohexanone.

In one embodiment, the solvent may exclude water, an alcohol solvent, and a glycol ether solvent. In the case of the water, alcohol solvent and glycol ether solvent, they may cause a side reaction with an electrode active material due to strong polarity and high reactivity thereof, such that these substances may not be included in the electrolyte.

**Auxiliary additive**

An electrolyte for a lithium secondary battery according to exemplary embodiments may further include an auxiliary additive together with the above-described additives.

In one embodiment, the auxiliary additive may be, for example, a cyclic carbonate compound, a fluorine-substituted cyclic carbonate compound, a sultone compound, a cyclic sulfate compound, or an oxalatophosphate compound.

The auxiliary additive may be included in an amount of 0.1 to 10 wt.% or 1 to 7 wt.% based on the total weight of the electrolyte. In this case, it is possible to implement a lithium secondary battery having more improved high-temperature storage characteristics.

In one embodiment, a ratio of a weight of the auxiliary additive to a weight of the additive in the electrolyte may be 0.5 to 10, greater than 1 and 10 or less, 1.25 to 10, or 1.25 to 7. In this case, it is possible to implement a lithium secondary battery having more improved high-temperature storage characteristics.

The cyclic carbonate compound including a double bond may be, for example, vinylene carbonate (VC) or vinyl ethylene carbonate (VEC).

The fluorine-substituted cyclic carbonate compound may be, for example, fluoroethylene carbonate (FEC).

The sultone compound may be, for example, 1,3-propane sultone, 1,3-propene sultone, or 1,4 -butane sultone.

The cyclic sulfate compound may be, for example, 1,2-ethylene sulfate, or 1,2-propylene sulfate.

The oxalatophosphate compound may be, for example, lithium bis(oxalato)phosphate.

In one preferred embodiment, a fluorine-substituted cyclic carbonate compound, a sultone compound, and a cyclic sulfate compound may be used together as the auxiliary additive.

When additionally including the auxiliary additive, durability and stability of the electrode may be further improved. The auxiliary additive may be included in an appropriate amount within a range that does not inhibit the movement of lithium ions in the electrolyte.

**Lithium salt**

The electrolyte includes a lithium salt, and the lithium salt may be represented by $Li^+X^-$.

For example, an anion ($X^-$) of the lithium salt may be $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, SCN- or $(CF_3CF_2SO_2)_2N^-$.

In some embodiments, the lithium salt may include at least one of $LiBF_4$ and $LiPF_6$.

In one embodiment, the lithium salt may be included in a concentration of 0.01 to 5 M, and more preferably 0.01 to 2 M based on the organic solvent. Within the above concentration range, transfer of lithium ions and/or electrons may be accelerated during charging and discharging of the battery, such that improved capacity may be secured.

**<Lithium secondary battery>**

A lithium secondary battery according to exemplary embodiments may include a cathode including a lithium metal oxide as a cathode active material; an anode disposed to face the cathode; and the above-described electrolyte for a lithium secondary battery.

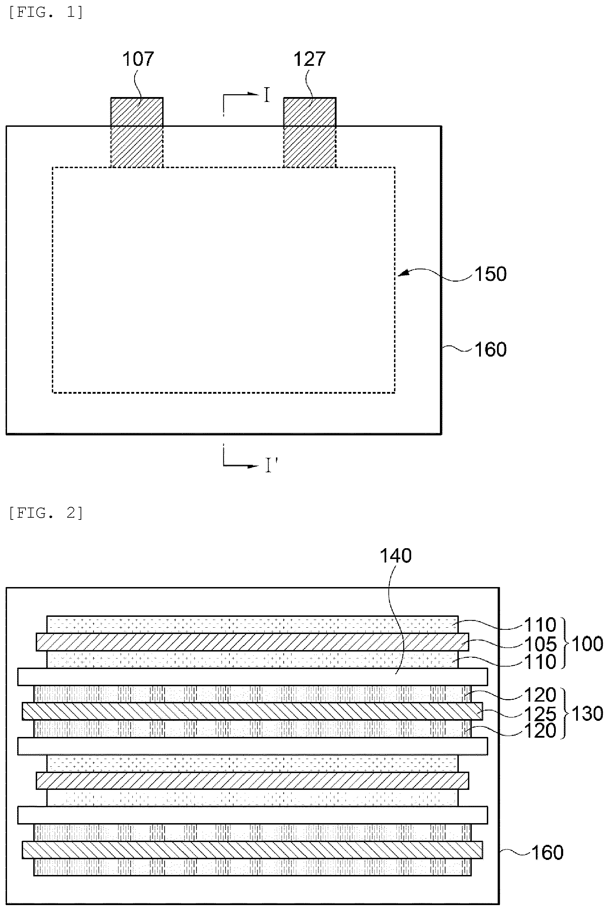

Hereinafter, the lithium secondary battery according to exemplary embodiments will be described in more detail with reference to the drawings. FIGS. 1 and 2 are a schematic plan view and a cross-sectional view illustrating the lithium secondary battery according to exemplary embodiments, respectively. FIG. 2 is a cross-sectional view taken on line I-I' in FIG. 1.

Referring to FIGS. 1 and 2, the lithium secondary battery may include a cathode 100 and an anode 130 disposed to face the cathode 100.

For example, the cathode 100 may include a cathode current collector 105 and a cathode active material layer 110 on the cathode current collector 105.

For example, the cathode active material layer 110 may include a cathode active material, and if necessary, a cathode binder and a conductive material.

For example, the cathode 100 may be prepared by mixing and stirring the cathode active material, the cathode binder, and the conductive material, etc. in a dispersion medium to prepare a cathode slurry, and then applying the cathode slurry to the cathode current collector 105, followed by drying and rolling the same.

For example, the cathode current collector 105 may include stainless steel, nickel, aluminum, titanium, copper, or an alloy thereof.

For example, the cathode active material may include lithium metal oxide particles capable of reversibly intercalating and deintercalating lithium ions.

In one embodiment, the cathode active material may include lithium metal oxide particles containing nickel.

In some embodiments, the lithium metal oxide particles may include 83 mol% or more of nickel based on a total number of moles of all elements except for lithium and oxygen. In this case, it is possible to implement a lithium secondary battery having a high capacity.

In some embodiments, the lithium metal oxide particles may include 83 mol% or more, 85 mol% or more, 90 mol% or more, or 95 mol% or more of nickel based on the total number of moles of all elements except for lithium and oxygen.

In some embodiments, the lithium metal oxide particles may further include at least one of cobalt and manganese.

In some embodiments, the lithium metal oxide particles may further include cobalt and manganese. In this case, it is possible to implement a lithium secondary battery having excellent output characteristics and penetration stability.

In one embodiment, the lithium metal oxide particles may be represented by Formula 1 below.

[Formula 1]   $Li_xNi_aCO_bM_cO_y$

In Formula 1, M may be at least one of Al, Zr, Ti, Cr, B, Mg, Mn, Ba, Si, Y, W, and Sr, and x, y, a, b, and c may be in a range of $0.9 \leq x \leq 1.2$, $1.9 \leq y \leq 2.1$, $0.83 \leq a \leq 1$, $0 \leq c/(a+b) \leq 0.13$, and $0 \leq c \leq 0.11$, respectively.

In some embodiments, a may be in a range of $0.85 \leq a \leq 1$, $0.9 \leq a \leq 1$, or $0.95 \leq a \leq 1$.

In some embodiments, a may be in a range of $0.85 \leq a < 1$, $0.9 \leq a < 1$, or $0.95 \leq a < 1$.

In some embodiments, M is Mn, and c may be in a range of $0 < c < 0.17$, $0 < c < 0.15$, $0 < c < 0.1$, or $0 < c < 0.05$.

In one embodiment, the lithium metal oxide particles may further include a coating element or a doping element. For example, the coating element or the doping element may include Al, Ti, Ba, Zr, Si, B, Mg, P, Sr, W, La, or an alloy thereof, or an oxide thereof. In this case, it is possible to implement a lithium secondary battery having more improved life-span characteristics.

For example, the cathode binder may include an organic binder such as polyvinylidene fluoride (PVDF), vinylidene fluoride-hexafluoropropylene copolymer (PVDF-co-HFP), polyacrylonitrile, polymethyl methacrylate, etc., or an aqueous binder such as styrene-butadiene rubber (SBR). In addition, for example, the cathode binder may be used together with a thickener such as carboxymethyl cellulose (CMC).

For example, the conductive material may include a carbon-based conductive material such as graphite, carbon black, graphene, and carbon nanotubes; or a metal-based conductive material including tin, tin oxide, titanium oxide, or a perovskite material such as LaSrCoOs, and LaSrMnOs.

For example, the anode 130 may include an anode current collector 125 and an anode active material layer 120 on the anode current collector 125.

For example, the anode active material layer 120 may include an anode active material, and if necessary, an anode binder and a conductive material.

For example, the anode 130 may be prepared by mixing and stirring the anode active material, the anode binder, the conductive material, etc. in a solvent to prepare an anode slurry, and then applying the anode slurry to the anode current collector 125, followed by drying and rolling the same.

For example, the anode current collector 125 may include gold, stainless steel, nickel, aluminum, titanium, copper or an alloy thereof, and preferably, includes copper or a copper alloy.

For example, the anode active material may be a material capable of intercalating and deintercalating lithium ions. For example, the anode active material may include a lithium alloy, a carbon-based active material, a silicon-based active material and the like.

For example, the lithium alloy may include aluminum, zinc, bismuth, cadmium, antimony, silicon, lead, tin, gallium, indium and the like.

For example, the carbon-based active material may include crystalline carbon, amorphous carbon, carbon composite, carbon fiber and the like.

For example, the amorphous carbon may include hard carbon, cokes, mesocarbon microbead (MCMB) calcined at 1500°C or lower, mesophase pitch-based carbon fiber (MPCF) or the like. For example, the crystalline carbon may include natural graphite, artificial graphite, graphite cokes, graphite MCMB, graphite MPCF and the like.

In one embodiment, the anode active material may include a silicon-based active material. For example, the silicon-based active material may include Si, $SiO_x$ (0<x<2), Si/C, SiO/C, Si-metal and the like. In this case, it is possible to implement a lithium secondary battery having a high capacity.

For example, when the anode active material includes the silicon-based active material, there may be a problem in that a thickness of the battery is increased at the time of repeated charging and discharging. The lithium secondary battery according to exemplary embodiments may include the above-described electrolyte to relieve a thickness increase rate of the battery.

In some embodiments, the silicon-based active material in the anode active material may be included in a content of 1 to 20 wt.%, 1 to 15 wt.%, or 1 to 10 wt.%.

The anode binder and the conductive material may be substantially the same as or similar to the above-described cathode binder and the conductive material. For example, the anode binder may be an aqueous binder such as styrene-butadiene rubber (SBR). In addition, for example, the anode binder may be used together with a thickener such as carboxymethyl cellulose (CMC).

In one embodiment, a separation membrane 140 may be interposed between the cathode 100 and the anode 130.

In some embodiments, the anode 130 may have an area greater than that of the cathode 100. In this case, lithium ions generated from the cathode 100 may smoothly move to the anode 130 without precipitation in the middle.

For example, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer or the like. Alternatively, for example, the separation membrane 140 may include a nonwoven fabric made of glass fiber having a high melting point, polyethylene terephthalate fiber or the like.

For example, an electrode cell may be formed including the cathode 100, the anode 130, and the separation membrane 140.

For example, a plurality of electrode cells may be laminated to form an electrode assembly 150. For example, the electrode assembly 150 may be formed by winding, lamination, z-folding, etc. the separation membrane 140.

The lithium secondary battery according to exemplary embodiments may include: a cathode lead 107 connected to the cathode 100 and protruding to an outside of a case 160; and an anode lead 127 connected to the anode 130 and protruding to the outside of the case 160.

For example, the cathode 100 and the cathode lead 107 may be electrically connected with each other. Similarly, the anode 130 and the anode lead 127 may be electrically connected with each other.

For example, the cathode lead 107 may be electrically connected to the cathode current collector 105. In addition, the anode lead 127 may be electrically connected to the anode current collector 125.

For example, the cathode current collector 105 may include a protrusion part (cathode tab, not illustrated) on one side. The cathode active material layer 110 may not be formed on the cathode tab. The cathode tab may be formed integrally with the cathode current collector 105 or may be connected thereto by welding or the like. The cathode current collector 105 and the cathode lead 107 may be electrically connected with each other through the cathode tab.

Similarly, the anode current collector 125 may include a protrusion part (anode tab, not illustrated) on one side. The anode active material layer 120 may not be formed on the anode tab. The anode tab may be formed integrally with the anode current collector 125 or may be connected thereto by welding or the like. The anode current collector 125 and the anode lead 127 may be electrically connected with each other through the anode tab.

In one embodiment, the electrode assembly 150 may include a plurality of cathodes and a plurality of anodes. For example, the plurality of cathodes and the plurality of anodes may be disposed alternately with each other, and the separation membranes may be interposed between the cathodes and the anodes. Accordingly, the lithium secondary battery according to an embodiment of the present invention may include a plurality of cathode tabs and a plurality of anode tabs protruding from each of the plurality of cathodes and the plurality of anodes.

In one embodiment, the cathode tabs (or, the anode tabs) may be laminated, compressed, and welded to form a cathode tab laminate (or, an anode tab laminate). The cathode tab laminate may be electrically connected to the cathode lead 107. In addition, the anode tab laminate may be electrically connected to the anode lead 127.

For example, the electrode assembly 150 may be housed in the case 160 together with the above-described electrolyte to form a lithium secondary battery.

The lithium secondary battery may be manufactured, for example, in a cylindrical shape, a square shape, a pouch type or a coin shape.

Hereinafter, preferred examples and comparative examples of the present invention will be described. However, the following examples are only preferred examples of the present invention, and the present invention is not limited thereto.

(1) Preparation of electrolyte

**Example 1**

1 M LiPF$_6$ solution (a mixed solvent of EC/EMC in a volume ratio of 25:75) was prepared. An electrolyte of Example 1 was prepared by adding an additive and an auxiliary additive in the contents (wt.%) shown in Table 1 below based on the total weight of the electrolyte to the LiPF$_6$ solution, and mixing with each other.

**Examples 2-9 and Comparative Example 1**

Electrolytes of Examples 2-9 and Comparative Example 1 were prepared by adding and mixing additives and auxiliary additives in the contents (wt.%) shown in Table 1 below.

(2) Preparation of lithium secondary battery sample

A cathode slurry was prepared by mixing and dispersing a cathode active material of Li [Ni$_{0.88}$Co$_{0.06}$Mn$_{0.06}$] O$_2$, carbon black, and polyvinylidene fluoride (PVDF) in NMP in a weight ratio of 98:1:1. The cathode slurry was uniformly applied to an aluminum foil having a thickness of 12 $\mu$m, followed by drying and rolling the same to prepare a cathode.

An anode slurry was prepared by mixing and dispersing an anode active material in which artificial graphite and natural graphite are mixed in a weight ratio of 7:3, a conductive material, styrene-butadiene rubber (SBR) and carboxymethyl cellulose (CMC) in water in a weight ratio of 96:3:1:1. The anode slurry was uniformly applied to a copper foil having a thickness of 8 pm, followed by drying and rolling the same to prepare an anode.

A film separator made of polyethylene (PE) having a thickness of 13 $\mu$m was stacked between the prepared electrodes to form a cell using a pouch having a size of 50 mm wide, 60 mm long and 5 mm thick. Then, a 2Ah class lithium secondary battery for an EV was prepared by injecting the electrolyte prepared in the above (1).

The electrode assembly was housed in a pouch (case) so that some regions of the cathode lead and the anode lead were exposed to an outside of the pouch, followed by sealing three sides of the pouch except for a side of an electrolyte injection part.

After injecting the electrolyte prepared in the above (1) and sealing the side of the electrolyte injection part, a lithium secondary battery sample was prepared by impregnation for 12 hours.

[TABLE 1]

| | Additive | | Auxiliary additive (wt.%) | | | Solvent | |
|---|---|---|---|---|---|---|---|
| | Type | Conten t (wt.%) | FEC | PS | PRS | Type | Volume ratio |
| Example 1 | NaFSI | 0.5 | 1 | 0.5 | 0.5 | EC/EMC | 25:75 |
| Example 2 | NaFSI | 1 | 1 | 0.5 | 0.5 | EC/EMC | 25:75 |
| Example 3 | NaFSI | 3 | 1 | 0.5 | 0.5 | EC/EMC | 25:75 |
| Example 4 | NaFSI | 5 | 1 | 0.5 | 0.5 | EC/EMC | 25:75 |
| Example 5 | KFSI | 0.5 | 1 | 0.5 | 0.5 | EC/EMC | 25:75 |
| Example 6 | KFSI | 1 | 1 | 0.5 | 0.5 | EC/EMC | 25:75 |
| Example 7 | KFSI | 3 | 1 | 0.5 | 0.5 | EC/EMC | 25:75 |
| Example 8 | LiFSI | 1 | 1 | 0.5 | 0.5 | EC/EMC | 25:75 |
| Example 9 | LiFSI | 5 | 1 | 0.5 | 0.5 | EC/EMC | 25:75 |
| Comparative Example 1 | - | - | 1 | 0.5 | 0.5 | EC/EMC | 25:75 |

The components described in Table 1 are as follows.

FEC: Fluoro ethylene carbonate
PS: 1,3-propane sultone
PRS: 1,3-propene sultone
EC: Ethylene carbonate
EMC: Ethyl methyl carbonate

**Experimental Example: Evaluation of storage characteristics at high temperature (60 °C, 18 weeks)**

(1) Measurement of capacity retention rate (Ret) after high temperature storage

0.5C CC/CV charge (4.2 V, 0.05C CUT-OFF) and 0.5C CC discharge (2.7 V CUT-OFF) were repeatedly performed three times on the lithium secondary batteries of the examples and comparative example at 25 °C, then capacity C1 was measured at the third time. Thereafter, the lithium secondary batteries of the examples and comparative example were subjected to 0.5C CC/CV charge (4.2 V 0.05C CUT-OFF). The charged lithium secondary batteries were stored at 60 °C for 18 weeks, followed by additionally leaving at room temperature for 30 minutes, and were subjected to 0.5C CC discharge (2.7 V CUT-OFF), then discharge capacity C2 was measured. The capacity retention rate was calculated by the following equation and results thereof are shown in Table 2 below.

$$\text{Capacity retention rate (\%) = C2/C1} \times 100 \ (\%)$$

(2) Measurement of internal resistance (DCIR) increase rate after high temperature storage

The lithium secondary batteries of the examples and comparative example were subjected to 0.5C CC/CV charge (4.2 V 0.05C CUT-OFF) at 25 °C, and then 0.5C CC discharge up to SOC 60. At SOC 60 point, the lithium secondary batteries were discharged and supplementary charged for 10 seconds, respectively, while changing C-rate to 0.2C 0.5C, 1C, 1.5C, 2C and 2.5C, then DCIR R1 was measured. The charged lithium secondary batteries of the examples and comparative example were left at 60 °C for 18 weeks under a condition of being exposed to the atmosphere, followed by additionally leaving at room temperature for 30 minutes, then DCIR R2 was measured by the same method as described above. The internal resistance increase rate was calculated by the following equation, and result values are shown in Table 2 below.

$$\text{Internal resistance increase rate (\%)} = (R2-R1)/R1 \times 100$$

(%)

(3) Measurement of battery expansion rate (battery thickness increase rate) after high temperature storage

The lithium secondary batteries of the examples and comparative example were subjected to 0.5C CC/CV charge (4.2 V 0.05C CUT-OFF) at 25 °C, then battery thickness T1 was measured.

After leaving the charged lithium secondary batteries of the examples and comparative example under the condition of being exposed to the atmosphere at 60 °C for 18 weeks (using a thermostatic device), battery thickness T2 was measured at room temperature. The battery thickness was measured using a plate thickness measuring device (Mitutoyo, 543-490B). The battery thickness increase rate was calculated by the following equation, and the result values are shown in Table 2 below.

$$\text{Battery thickness increase rate (\%)} = (T2-T1)/T1 \times 100$$

(%)

[TABLE 2]

| | High-temperature storage (60 °C, 18 weeks) | | |
| --- | --- | --- | --- |
| | Capacity retention rate (Ret) (%) | DCIR increase rate (%) | Battery expansion rate (%) |
| Example 1 | 78.1 | 52.9 | 100.2 |
| Example 2 | 77.4 | 47.9 | 95.9 |
| Example 3 | 77.2 | 48.1 | 97 |
| Example 4 | 77 | 50.1 | 96 |
| Example 5 | 80.1 | 42.8 | 45.9 |
| Example 6 | 80.4 | 44.3 | 48 |
| Example 7 | 79.3 | 31.2 | 53 |
| Example 8 | 73.2 | 78.2 | 130.8 |
| Example 9 | 74 | 73.8 | 135.7 |
| Comparative Example 1 | 75.2 | 68 | 109.2 |

As can be seen from Table 2, it was confirmed that the lithium secondary batteries of Examples 1 to 7 including a bis(fluorosulfonyl)imide alkali metal salt, for example, NaFSI or KFSI as an additive, exhibited excellent capacity retention rate, resistance increase rate and battery expansion rate (effect of reducing gas generation rate) through the evaluation of high-temperature storage performance. In particular, it was confirmed that, in the lithium secondary batteries of Examples 5 to 7 including KFSI, the amount of generated gas was significantly reduced in view of the very low battery expansion rate.

On the other hand, it was confirmed that, in the lithium secondary batteries of Examples 8 to 9 including LiFSI as a bis(fluorosulfonyl)imide alkali metal salt, high-temperature storage performance was deteriorated compared to Examples 1 to 7.

In addition, it was confirmed that, in the lithium secondary battery of Comparative Example 1 which does not include NaFSI or KFSI as a bis (fluorosulfonyl) imide alkali metal salt, the evaluated high-temperature storage performance was deteriorated.

**Claims**

1. An electrolyte for a lithium secondary battery comprising:

   a lithium salt;
   a solvent composed of a non-aqueous solvent and including a carbonate solvent; and
   an additive including a bis(fluorosulfonyl)imide alkali metal salt.

2. The electrolyte for a lithium secondary battery according to claim 1, wherein the bis(fluorosulfonyl)imide alkali metal salt includes at least one selected from the group consisting of sodium bis(fluorosulfonyl)imide, potassium bis(fluorosulfonyl)imide, rubidium bis(fluorosulfonyl)imide and cesium bis(fluorosulfonyl)imide.

3. The electrolyte for a lithium secondary battery according to claim 1, wherein the bis(fluorosulfonyl)imide alkali metal salt excludes lithium bis(fluorosulfonyl)imide.

4. The electrolyte for a lithium secondary battery according to claim 1, wherein the additive is included in an amount of 0.1 to 10% by weight based on a total weight of the electrolyte.

5. The electrolyte for a lithium secondary battery according to claim 1, wherein the additive is included in an amount of 0.5 to 5% by weight based on the total weight of the electrolyte.

6. The electrolyte for a lithium secondary battery according to claim 1, wherein the solvent excludes water, an alcohol solvent and a glycol ether solvent.

7. The electrolyte for a lithium secondary battery according to claim 1, wherein the carbonate solvent includes a cyclic carbonate solvent and a linear carbonate solvent.

8. The electrolyte for a lithium secondary battery according to claim 7, wherein the cyclic carbonate solvent includes at least one selected from the group consisting of ethylene carbonate, propylene carbonate and butylene carbonate.

9. The electrolyte for a lithium secondary battery according to claim 7, wherein the linear carbonate solvent includes at least one selected from the group consisting of dimethyl carbonate, ethyl methyl carbonate, diethyl carbonate, methyl propyl carbonate, ethyl propyl carbonate and dipropyl carbonate.

10. The electrolyte for a lithium secondary battery according to claim 1, wherein the electrolyte includes at least one auxiliary additive selected from the group consisting of a cyclic carbonate compound, a fluorine-substituted cyclic carbonate compound, a sultone compound, a cyclic sulfate compound and an oxalatophosphate compound.

11. The electrolyte for a lithium secondary battery according to claim 10, wherein the auxiliary additive is included in an amount of 0.1 to 10% by weight based on the total weight of the electrolyte.

12. The electrolyte for a lithium secondary battery according to claim 10, wherein a ratio of a weight of the auxiliary additive to a weight of the additive in the electrolyte is 0.5 to 10.

13. A lithium secondary battery comprising:

   a cathode including a lithium metal oxide as a cathode active material;
   an anode disposed to face the cathode; and
   the electrolyte for a lithium secondary battery according to claim 1.

[FIG. 1]

[FIG. 2]

**REFERENCES CITED IN THE DESCRIPTION**

**Patent documents cited in the description**

- KR 1020190092284